(19) Europäisches Patentamt
European Patent Office
Office européen des brevets

(11) **EP 2 955 857 B1**

(12) **EUROPEAN PATENT SPECIFICATION**

(45) Date of publication and mention
of the grant of the patent:
**13.12.2017 Bulletin 2017/50**

(51) Int Cl.:
*H04B 3/487* (2015.01)     *H04M 3/34* (2006.01)

(21) Application number: **14305872.5**

(22) Date of filing: **10.06.2014**

(54) **IN-SERVICE ESTIMATION OF VECTORING PERFORMANCE METRICS**

SCHÄTZUNG VON VECTORING-LEISTUNGSMETRIKEN WÄHREND DEM GEBRAUCH

ESTIMATION DES INDICATEURS DE PERFORMANCE DE VECTORISATION EN SERVICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.12.2015 Bulletin 2015/51**

(73) Proprietor: **Alcatel Lucent
92100 Boulogne-Billancourt (FR)**

(72) Inventor: **Nuzman, Carl
Murray Hill, NJ 07974-0636 (US)**

(74) Representative: **ALU Antw Patent Attorneys
Intellectual Property and Standards
Copernicuslaan 50
2018 Antwerp (BE)**

(56) References cited:
**EP-A1- 2 835 911     US-A1- 2012 093 204**

• **JOCHEN MAES ET AL: "Pilot-based crosstalk
channel estimation for vector-enabled VDSL
systems", INFORMATION SCIENCES AND
SYSTEMS (CISS), 2010 44TH ANNUAL
CONFERENCE ON, IEEE, PISCATAWAY, NJ,
USA, 17 March 2010 (2010-03-17), pages 1-6,
XP031676334, ISBN: 978-1-4244-7416-5**

**Description**

**Technical Field of the Invention**

The present invention relates to in-service estimation of vectoring performance metrics.

**Technical Background of the Invention**

Crosstalk (or inter-channel interference) is a major source of channel impairment for Multiple Input Multiple Output (MIMO) wired communication systems, such as Digital Subscriber Line (DSL) communication systems.

As the demand for higher data rates increases, DSL systems are evolving toward higher frequency bands, wherein crosstalk between neighboring transmission lines (that is to say transmission lines that are in close vicinity over part or whole of their length, such as twisted copper pairs in a cable binder) is more pronounced (the higher frequency, the more coupling).

Different strategies have been developed to mitigate crosstalk and to maximize effective throughput, reach and line stability. These techniques are gradually evolving from static or dynamic spectral management techniques to multi-user signal coordination, or vectoring hereinafter.

One technique for reducing inter-channel interference is joint signal precoding: the transmit data symbols are jointly passed through a precoder before being transmitted over the respective communication channels. The precoder is such that the concatenation of the precoder and the communication channels results in little or no inter-channel interference at the receivers.

A further technique for reducing inter-channel interference is joint signal post-processing: the receive data symbols are jointly passed through a postcoder before being detected. The postcoder is such that the concatenation of the communication channels and the postcoder results in little or no inter-channel interference at the receivers. Postcoders are also sometimes referred to as crosstalk cancellation filters.

Signal vectoring is typically performed within a Distribution Point Unit (DPU), wherein all the data symbols concurrently transmitted over, or received from, all the subscriber lines of the vectoring group are available. For instance, signal vectoring is advantageously performed within a Digital Subscriber Line Access Multiplexer (DSLAM) deployed at a Central office (CO) or as a fiber-fed remote unit closer to subscriber premises (street cabinet, pole cabinet, building cabinet, etc). Signal precoding is particularly appropriate for downstream communication (toward customer premises), while signal post-processing is particularly appropriate for upstream communication (from customer premises).

In a vectored DSL system, some key performance metrics are defined for properly assessing the performances of vectoring operation and corresponding vectoring gains for the end-users. The following three bit rates are the typical reference metrics for vectored DSL systems:

a) the single-user bit rate, which is defined as the achievable bit rate when only one line at a time is in service (i.e., upper-bound bit rate free of any crosstalk but still with some background noise);
b) the non-vectored bit rate, which is defined as the achievable bit rate when vectoring is not active and all interfering lines are in service (i.e., lower-bound bit rate with background noise plus crosstalk from all interfering lines); and
c) the vectored bit rate, which is defined as the achievable bit rate when vectoring is active and all interfering lines are in service (i.e., intermediate achievable bit rate with background noise plus residual crosstalk after signal vectoring).

The technical problem is to estimate the first two bit rates in a running system, i.e. a system currently in use by customers.

Typically to measure the three bit rates for all lines, an automatic management script goes through the following process:

a) Initialize one line at a time, record its bit rate in showtime, and then deactivate the line. Repeat for all lines in the vectoring group.
b) Initialize all lines together with vectoring inactive. After all lines are in showtime, record the bit rates of all lines. Deactivate all lines.
c) Initialize all lines together with vectoring active. After all lines are in showtime, and vectoring algorithms have been given sufficient time to converge, record the bit rates for all lines.

There are two primary difficulties with this procedure. The first difficulty is that the process can take a long time, especially in a large vectoring group. Measuring the single-user bit rates in particular takes at least 30 seconds per line, which would take over three hours for a 400 lines vectoring group. The second difficulty is that the process is disruptive, requiring multiple initialization and deactivation steps for each line. For single-line measurement, each line must also remain out of service for long periods of time.

For these reasons, measuring vectoring performance metrics is suitable for a laboratory setting, but not very suitable for vectored DSL systems deployed in the field.

The following background art, which may be regarded as useful for understanding the present invention and its relationship to the prior art, is further acknowledged and briefly discussed.

The European patent application entitled "*Detection of Demapping Errors*" filed on August 6, 2013, and published on February 11, 2015 with publication number EP2835911, discloses a method and apparatus for estimating at least one crosstalk coefficient at a given carrier frequency from at least one respective disturber line towards a victim line of a vectoring group. At least one crosstalk probing sequence out of a set of orthogonal crosstalk probing sequences is assigned to the at least one respective disturber line for modulation at the given carrier frequency of at least one respective sequence of crosstalk probing symbols, and error samples as successively measured by a receiver coupled to the victim line at the given carrier frequency while the at least one sequence of crosstalk probing symbols are being transmitted over the at least one respective disturber line are fed back for crosstalk estimation. The received error samples are next correlated with at least one unassigned crosstalk probing sequence out of the set of orthogonal crosstalk probing sequences for detection of a demapping error in the received error samples. The at least one unassigned crosstalk probing sequence is not actively used by any line of the vectoring group during the transmission of the at least one sequence of crosstalk probing symbols over the at least one respective disturber line. This European patent application qualifies as an interfering application pursuant to Art. 54(3) EPC.

### Summary of the invention

It is an object of the present invention to improve in-service estimation of the vectoring performance metrics.

In accordance with a first aspect of the invention, a network characterizing unit for in-service characterization of a single-user data rate achievable over a particular subscriber line of a vectoring group is configured to receive error samples as successively measured by a receiver coupled to the particular subscriber line while sequences of pilot symbols are being transmitted over the respective subscriber lines of the vectoring group. The sequences of pilot symbols are modulated with respective pilot sequences selected from a set of mutually orthogonal pilot sequences. The network characterizing unit is further configured to characterize the single-user data rate by correlation of the received error samples with at least one unassigned pilot sequence from the set of mutually orthogonal pilot sequences. The at least one unassigned pilot sequence is not used for modulation of the transmitted sequences of pilot symbols. Characterizing the single-user data rate comprises at estimating a value of the single-user data rate and/or determining a bound for a value of the single-user data rate.

In one embodiment of the invention, the characterization of the single-user data rate comprises characterizing a crosstalk-free noise level at the receiver by correlation of the received error samples with the least one unassigned pilot sequence, and characterizing the single-user data rate from the so-characterized crosstalk-free noise level.

In one embodiment of the invention, the network characterizing unit is further configured to characterize a vectored data rate achievable over the particular subscriber line from the received error samples, and to derive a vectoring gap from the so-characterized single-user and vectored data rates.

In one embodiment of the invention, the network characterizing unit is further configured to refine the characterization of the single-user data rate from the vectoring gap and an actual vectored data rate reported by the receiver.

In one embodiment of the invention, the network characterizing unit is further configured to receive vectoring information indicative of current vectoring operation for the vectoring group, to characterize a crosstalk level at the receiver from the vectoring information, and to characterize a non-vectored data rate achievable over the particular subscriber line from the so-characterized crosstalk-free noise level and crosstalk level.

In one embodiment of the invention, the vectoring information comprises individual vectoring coefficient values that are used for jointly processing the signals to be transmitted to, or received from, the subscriber lines of the vectoring group.

In one embodiment of the invention, the vectoring information comprises weighted row sums of the squared magnitudes of vectoring coefficient values that are used for jointly processing the signals to be transmitted to, or received from, the subscriber lines of the vectoring group.

In one embodiment of the invention, a desired number M of pilot sequences from the set of mutually orthogonal pilot sequences are kept unassigned and available for characterization of the single-user data rate.

In one embodiment of the invention, the set of mutually orthogonal pilot sequences comprises pilot sequences of length L greater than or equal to $N + M$, N denoting the size of the vectoring group.

Such a network characterizing unit may form part of an access node that supports wired communication to subscriber devices over an access plant, such as a DSLAM, an Ethernet switch, an edge router, etc, and deployed at a CO or as a fiber-fed remote unit closer to subscriber premises (street cabinet, pole cabinet, building cabinet, etc).

Such a network characterizing unit may alternatively form part of a computing platform communicatively coupled to an access node, such as a network manager, a network analyzer or alike.

In accordance with another aspect of the invention, a method for in-service characterization of a single-user data rate achievable over a particular subscriber line of a vectoring group comprises receiving error samples as successively measured by a receiver coupled to the particular subscriber line while sequences of pilot symbols are being transmitted over the respective subscriber lines of the vectoring group. The sequences of pilot symbols are modulated with respective pilot sequences selected from a set of mutually orthogonal pilot sequences. The method further comprises characterizing the single-user data rate by correlation of the received error samples with at least one unassigned pilot sequence from the set of mutually orthogonal pilot sequences. The at least one unassigned pilot sequence is not used for modulation of the transmitted sequences of pilot symbols. Characterizing the single-user data rate comprises estimating a value of the single-user data rate and/or determining a bound for a value of the single-user data rate.

Embodiments of a method according to the invention correspond with the embodiments of a network characterizing unit according to the invention.

Vectoring performance metrics can be estimated relatively quickly within an in-service vectored system by using two main techniques.

The first technique is for estimating the single-user bit rate. The system performs tracking using mutually orthogonal pilot sequences slightly longer than necessary, so that there are unused pilot sequences in the set. Correlating the error samples collected over one pilot cycle with unused pilot sequences provides an estimate of the background noise level at the receiver, with all crosstalk from the lines in the vectoring group removed. This 'crosstalk-free' noise level can then be used to estimate the single-user bit rate.

The second technique is for estimating the non-vectored bit rate. The non-vectored bit rate can be estimated using knowledge of the pre-compensation or post-compensation coefficients currently in use in the precoder or postcoder, together with the current Signal-to-Noise Ratio (SNR) as

estimated from the error samples, or as directly reported by the receivers.

A first advantage of the present invention is to characterize vectoring performance metrics while the subscriber lines are in operation, and without service interruption.

A further advantage is that the time required to characterize the vectoring performance is much smaller than with the existing solution. For example, for a 400 lines system, initializing the 400 lines one at a time would take at least 400 x 0,5 min = 200 min. Using the invention would only require receiving error samples over a pilot cycle of 512 pilot symbols (e.g., requiring 512/16 = 32 s for VDSL2) plus some computation time.

## Brief Description of the Drawings

The above and other objects and features of the invention will become more apparent and the invention itself will be best understood by referring to the following description of an embodiment taken in conjunction with the accompanying drawings wherein:

- fig. 1 represents an overview of an access plant; and
- fig. 2 represents an access node as per the present invention.

## Detailed Description of the Invention

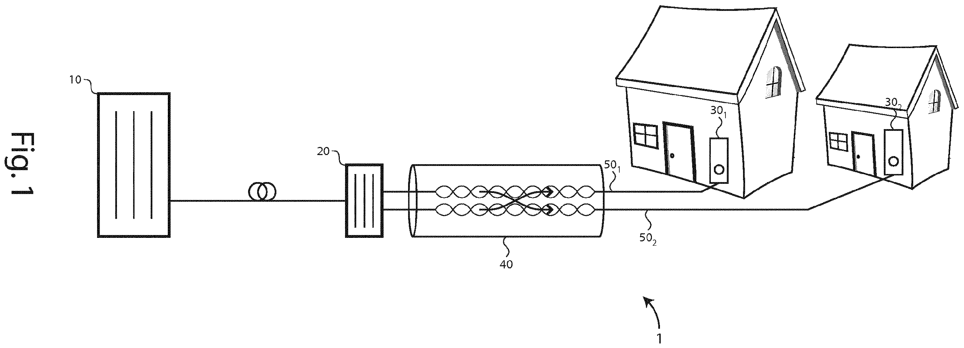

There is seen in fig. 1 an access plant 1 comprising a network unit 10 at a CO, a DPU 20 coupled via one or more optical fibers to the network unit 10, and further coupled via a copper loop plant to Customer Premises Equipment (CPE) 30 at various subscriber premises.

The copper loop plant comprises a common access segment 40, wherein the subscriber lines are in close vicinity with each other and thus induce crosstalk into each other, and dedicated loop segments 50 for final connection to the subscriber premises. The transmission media is typically composed of copper Unshielded Twisted Pairs (UTP).

The DPU 20 comprises a vectoring unit for jointly processing the data symbols that are being transmitted over, or received from, the loop plant in order to mitigate the crosstalk induced within the common access segment and to increase the communication data rates achievable over the respective subscriber lines.

More formally, a vectored system can be described by the following linear model:

$$\mathbf{Y}(k) = \mathbf{H}(k)\mathbf{X}(k) + \mathbf{Z}(k) \quad (1),$$

wherein the N-component complex vector $\mathbf{X}$, respectively $\mathbf{Y}$, denotes a discrete frequency representation, as a function of the frequency/carrier/tone index k, of the symbols transmitted over, respectively received from, the N vectored channels,

wherein the NxN complex matrix **H** is referred to as the channel matrix: the (n,m)-th component $H_{nm}$ of the channel matrix **H** describes how the communication system produces a signal on the n-th channel output in response to a signal being transmitted to the m-th channel input; the diagonal elements of the channel matrix describe direct channel coupling, and the off-diagonal elements of the channel matrix (also referred to as the crosstalk coefficients) describe inter-channel coupling,
and wherein the N-component complex vector **Z** denotes additive noise over the N channels, such as Radio Frequency Interference (RFI) or thermal noise.

Linear signal precoding and post-processing are advantageously implemented by means of matrix products.

In downstream, the linear precoder performs a matrix-product in the frequency domain of a transmit vector **U**(k) with a precoding matrix **P**(k), i.e. **X**(k)=**P**(k)**U**(k) in eq. (1), the precoding matrix **P**(k) being such that the overall channel matrix **H**(k)**P**(k) is diagonalized, meaning the off-diagonal coefficients of the overall channel **H**(k)**P**(k), and thus the inter-channel interference, mostly reduce to zero.

Practically, and as a first order approximation, the precoder superimposes anti-phase crosstalk pre-compensation signals over the victim line along with the direct signal that destructively interfere at the receiver with the actual crosstalk signals from the respective disturber lines.

In upstream, the linear postcoder performs a matrix-product in the frequency domain of the receive vector **Y**(k) with a crosstalk cancellation matrix **Q**(k) to recover the transmit vector **U**(k) (after channel equalization and power normalization), the crosstalk cancellation matrix **Q**(k) being such that the overall channel matrix **Q**(k)**H**(k) is diagonalized, meaning the off-diagonal coefficients of the overall channel **Q**(k)**H**(k), and thus the inter-channel interference, mostly reduce to zero.

Thus, the performance of signal vectoring depends critically on the component values of the precoding or cancellation matrix, which component values are to be computed and updated according to the actual and varying crosstalk couplings.

The various channel couplings are estimated by a vectoring controller based on pilot (or probing) signals transmitted over the respective channels. The pilot signals are typically transmitted over dedicated symbols and/or over dedicated tones.

For instance, in the recommendation entitled "*Self-FEXT Cancellation (Vectoring) For Use with VDSL2 Transceivers*", ref. G.993.5, and adopted by the International Telecommunication Union (ITU) on April 2010, the transceiver units send pilot signals on the so-called SYNC symbols. The SYNC symbols occur periodically after every 256 DATA symbols, and are transmitted synchronously over all the vectored lines (super frame alignment).

On a given disturber line, a representative subset of the active tones of the SYNC symbol are 4-QAM modulated by the same pilot digit from a given pilot sequence, and transmit one of two complex constellation points, either '1 + j' corresponding to '+1', or '-1 - j' corresponding to '-1'. The remaining carriers of the SYNC symbol keeps on carrying the typical SYNC-FLAG for On-Line Reconfiguration (OLR) message acknowledgment.

On a given victim line, both the real and imaginary part of the slicer error, which is the difference vector between the equalized received frequency sample and the constellation point onto which this frequency sample is demapped, are measured on a per pilot tone basis and reported for a specific SYNC symbol to the vectoring controller for further crosstalk estimation.

The successive error samples are next correlated with a given pilot sequence transmitted over a particular disturber line in order to obtain the crosstalk contribution from that disturber line. To reject the crosstalk contribution from the other lines, the pilot sequences used over the respective disturber lines are made orthogonal with respect to each other, for instance by using the well-known Walsh-Hadamard sequences.

The crosstalk estimates are eventually used for initializing the coefficients of the precoding or cancellation matrix. Once the precoding or cancellation matrix is initialized, the process is repeated as needed to track the residual crosstalk and to obtain more and more accurate estimates in order to drive that residual crosstalk down to zero.

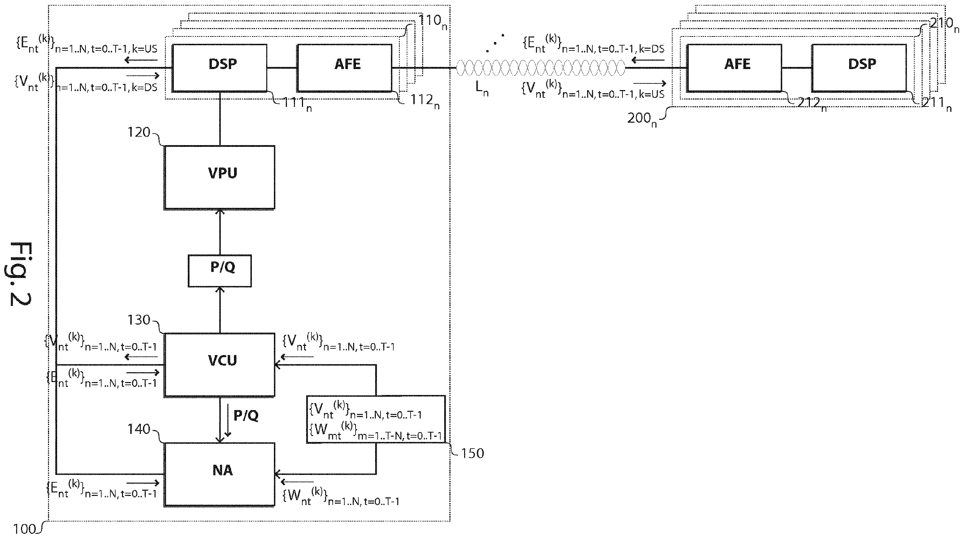

There is seen in fig. 2 greater details about a DPU 100 as per the present invention. The DPU 100 is coupled to N CPEs $200_1$ to $200_N$ through N respective subscriber lines $L_1$ to $L_N$, which are assumed to form part of the same vectoring group.

The DPU 100 comprises:

- N transceivers $110_1$ to $110_N$;
- a vectoring Processing Unit 120 (or vPU);
- a Vectoring Control Unit 130 (or VCU) for controlling the operation of the VPU 120; and
- a network characterizing unit 140 (or NA).

The transceivers 110 are individually coupled to the VPU 120, to the VCU 130 and to the network characterizing unit 140. The vcu 130 is further coupled to the VPU 120 and to the network characterizing unit 140.

The transceivers 110 respectively comprise:

- a Digital Signal Processor (DSP) 111; and
- an Analog Front End (AFE) 112.

The CPEs 200 comprise respective transceivers 210, each comprising:

- a Digital Signal Processor (DSP) 211; and
- an Analog Front End (AFE) 212.

The AFEs 112 and 212 individually comprise a Digital-to-Analog Converter (DAC) and an Analog-to-Digital Converter (ADC), a transmit filter and a receive filter for confining the signal energy within the appropriate communication frequency bands while rejecting out-of-band interference, a line driver for amplifying the transmit signal and for driving the transmission line, and a Low Noise Amplifier (LNA) for amplifying the receive signal with as little noise as possible.
In case of Frequency Division Duplexing (FDD) operation where downstream and upstream communications operate simultaneously over the same transmission medium in distinct and non-overlapping frequency bands, the AFEs 112 and 212 further comprise a hybrid for coupling the transmitter output to the transmission medium and the transmission medium to the receiver input while achieving low transmitter-receiver coupling ratio. The AFE may further accommodate echo cancellation filters to reduce the coupling ratio at a further extent.
In case of Time Duplexing Division (TDD) operation where downstream and upstream communications operate over the same frequency band but in distinct and non-overlapping time slots, the hybrid can be advantageously omitted as the transmitter and receiver operate in alternate mode: the receive circuitry is switched OFF (or the receive signal is discarded) while the transmit circuitry is active, and the way around, the transmit circuitry is switched OFF while the receive circuitry is active.
The AFEs 112 and 212 further comprise impedance-matching circuitry for adapting to the characteristic impedance of the transmission line, clipping circuitry for clipping any voltage or current surge occurring over the transmission line, and isolation circuitry (e.g., a transformer) for DC-isolating the transceiver from the transmission line.
The DSPs 111 and 211 are configured to operate downstream and upstream communication channels for conveying user traffic over the respective transmission lines.
The DSPs 111 and 211 are further configured to operate downstream and upstream control channels that are used to transport control traffic, such as diagnosis or management commands and responses. Control traffic is multiplexed with user traffic over the transmission medium.
More specifically, the DSPs 111 and 211 are for encoding and modulating user and control data into digital data symbols, and for de-modulating and decoding user and control data from digital data symbols.
The following transmit steps are typically performed within the DSPs 111 and 211:

- data encoding, such as data multiplexing, framing, scrambling, error correction encoding and interleaving;
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase), possibly with Trellis coding;
- signal scaling;
- Inverse Fast Fourier Transform (IFFT);
- cyclic Prefix (CP) insertion; and possibly
- time-windowing.

The following receive steps are typically performed within the DSPs 111 and 211:

- CP removal, and possibly time-windowing;
- Fast Fourier Transform (FFT);
- Frequency EQualization (FEQ);
- signal de-modulation and detection, comprising the steps of applying to each and every equalized frequency sample an appropriate constellation grid, the pattern of which depends on the respective carrier bit loading, detecting the expected transmit constellation point and the corresponding transmit bit sequence, possibly with Trellis decoding, and re-ordering all the detected chunks of bits according to the carrier ordering table; and
- data decoding, such as data de-interleaving, error correction, de-scrambling, frame delineation and demultiplexing.

Some of these transmit or receive steps can be omitted, or some additional steps can be present, depending on the exact digital communication technology being used.
The DSPs 111 are further configured to supply transmit frequency samples to the VPU 120 before Inverse Fast Fourier Transform (IFFT) step for joint signal precoding, and to supply receive frequency samples to the VPU 120 after Fast Fourier Transform (FFT) step for joint signal post-processing.

The DSPs 111 are further configured to receive corrected frequency samples from the VPU 120 for further transmission or detection. Alternatively, the DSPs 111 may receive correction samples to add to the initial frequency samples before further transmission or detection.

The VPU 120 is configured to mitigate the crosstalk induced over the transmission lines. This is achieved by multiplying a vector of transmit frequency samples **U** with a precoding matrix **P** so as to pre-compensate an estimate of the expected crosstalk (downstream), or by multiplying a vector of receive frequency samples **Y** with a crosstalk cancellation matrix **Q** so as to post-compensate an estimate of the incurred crosstalk (upstream).

In the matrix **P** or **Q**, a row n represents a particular victim line Ln, while a column m represents a particular disturber line Lm. At the intersection, the coupling coefficient that should be applied to the corresponding disturber transmit or receive frequency sample for mitigating over the victim line Ln the crosstalk from the disturber line Lm. Not all the coefficients of the matrix need to be determined, for instance on account of limited vectoring capabilities first assigned to the strongest crosstalkers, or still for instance due to the fact that some lines do not noticeably interact with each other. The undetermined coefficients are preferably set to 0.

The VCU 130 is basically for controlling the operation of the VPU 120, and more specifically for estimating and tracking the crosstalk coefficients between the transmission lines of the vectoring group, and for initializing and updating the coefficients of the precoding matrix **P** and of the crosstalk cancellation matrix **Q** from the so-estimated crosstalk coefficients.

The VCU 130 starts first by configuring the respective downstream pilot sequences for use by the transceivers 110 for downstream crosstalk estimation, and the upstream pilot sequences for use by the transceivers 210 for upstream crosstalk estimation. The pilot sequences actively assigned to the subscriber lines $L_1$ to $L_N$ are denoted as $\{V_{nt}\}_{n=1..,N,T=0..T-1}$ (see $\{V_{nt}\}_{n=1..N,t=0..T-1,k=DS}$ and $\{V_{nt}\}_{n=1..N, t=0.. T-1, k=US}$ in fig. 2, wherein K=DS and K=US denote the set of downstream and upstream pilot carriers respectively), and are chosen from a set of mutually orthogonal pilot sequences 150.

The VCU 130 further reserves a number M of pilot sequences $\{W_{mt}\}_{m=1..M,t=0..T-1}$ within the set of mutually orthogonal pilot sequences 150 for characterization of vectoring performances: these pilot sequences are not assigned to any subscriber line.

The length T of the pilot sequences $\mathbf{V}_n$ and $\mathbf{W}_m$ shall thus be greater than or equal to N+M so as to fulfill the orthogonality requirement.

The VCU 130 gathers respective slicer errors $\{E_{nt}\}_{n=1..N, t=0..T-1}$ as measured during the detection of the pilot digits by the remote transceivers 210 for downstream communication, and by the local transceivers 110 for upstream communication (see $\{E_{nt}\}_{n=1..N,t=0..T-1,k=DS}$ and $\{E_{nt}\}_{n=1..N,t=0..,T-1,k=US}$ in fig. 2).

The VCU 130 correlates a sequence of T successive error samples $\{E_{nt}\}_{t=0..T-1}$ on a given victim line $L_n$ with the pilot sequence $\{V_{mt}\}_{t=0..T-1}$ transmitted over a respective disturber line $L_m$ in order to estimate the nominal or residual crosstalk coefficients from the disturber line $L_m$ into the victim line $L_n$ (after some power normalization).

The vcu 130 next determines the coefficients of the precoding matrix **P** and of the crosstalk cancellation matrix **Q** from the so-estimated crosstalk coefficients by means of techniques such as matrix inversion (first or second order inversion, full inversion), additive or multiplicative matrix updates, etc.

The VCU 130 passes the current coefficients values of the precoding matrix **P** and crosstalk cancellation matrix **Q** to the network characterization unit 140 for determination of the vectoring performance metrics over the respective subscriber lines $L_1$ to $L_N$.

The network characterization unit 140 is configured to determine estimates and/or bounds for the single-user bit rates, the non-vectored bit-rates and the vectored bit-rates achievable over the respective subscriber lines $L_1$ to $L_N$ without causing service disruption over these lines. As it will be set forth hereinafter, those performance metrics are computed by correlation of the error samples $\{E_{nt}\}_{n=1..N,t=1..T}$ with the unused pilot sequences $\{W_{mt}\}_{m=1..M,t=0..T-1}$, and based on the vectoring and communication parameters that are used over the subscriber lines $L_1$ to $L_N$ during these error measurements. The error samples can be obtained directly from the transceivers 210 (downstream) and 110 (upstream), or indirectly from the VCU 130. The vectoring parameters are typically obtained from the VCU 130, or from a local data repository wherein the vectoring parameters are held. The communication parameters are typically obtained directly from the transceivers 110 (downstream) and 210 (upstream), or from a communication controller managing these communication parameters, or from a local data repository wherein the communication parameters are held, such as a Management Information Base (MIB).

Focusing now on downstream communications, and introducing a time dimension into equation (1), the error feedback samples received on a particular tone over a pilot cycle of length T can be represented for a downstream vectored system of N active lines as:

$$\mathbf{E} = (\mathbf{AP} - \mathbf{I})\mathbf{V} + \mathbf{Z} \quad (2),$$

wherein **E** is an NxT matrix of error feedback samples, **A** is the NxN channel matrix including the effect of receiver equalization, **P** is the NxN precoder matrix, **I** is the identity matrix, **V** is an NxT pilot matrix with each row representing an assigned pilot sequence, and **Z** is now an NxT matrix of background noise samples after receiver equalization.

Note that in single-line operation, the crosstalk terms **(AP-I)V** would not be present, and we would have **E** = **Z**. Our goal is to estimate the variance of the components of **E**.

According to the invention, the pilot length T is chosen to be larger than the group size N. Therefore, it is possible to choose an (T-N)xT matrix **W** comprising the unused pilot sequences as rows. The rows of **W** are mutually orthonormal, i.e. **WW**$^H$ = **I**, and are orthogonal to any of the rows of **V**, i.e. **VW**$^H$ = **0**. Correlating each row of the error feedback matrix **E** with each of the rows of **W** yields the Nx(T-N) matrix:

$$\mathbf{F} = \mathbf{EW}^H = (\mathbf{AP-I})\mathbf{VW}^H + \mathbf{ZW}^H = \mathbf{ZW}^H \quad (3).$$

The value of **F** for line Ln, $1 \leq n \leq N$, and for unused pilot sequence m, $1 \leq m \leq M = T-N$, is given by:

$$F_{nm} = \sum_t Z_{nt} W_{mt}^* \quad ,$$

wherein z* denotes the complex conjugate of z.

Assuming that the noise samples on line $L_n$ are independent and identically distributed (i.i.d.) random variables with zero mean and variance $\sigma^2$, and using the fact that each row of **W** has unit norm, the variance of $F_{nm}$ is also $\sigma^2$. Therefore, the background noise strength on line Ln can be estimated as the empirical variance of the F values:

$$\hat{\sigma}_n^2 = \frac{1}{T-N} \sum_{m=1}^{T-N} |F_{nm}|^2 \quad (4),$$

wherein $\hat{x}$ denotes an estimate of x.

Since the signal level in error feedback corresponds to the complex constellation point (1+j) or (-1-j), both with squared magnitude 2, the estimated single-user SNR for line Ln, expressed in dB, is:

$$\hat{\gamma}_n = 10\log_{10}(2) - 10\log_{10}(\hat{\sigma}_n^2) \quad (5).$$

Note that all of the above was carried out for a particular tone.

The single-user bit rate for line Ln can be computed from the single-user SNR on all tones using usual methods. For instance, one can use the Shannon formula together an assumed SNR gap accounting for the particular encoding and modulation scheme being used over the respective tones, and possibly including a particular SNR margin. In case error feedback is not available on all tones, approximate SNR values for the missing tones can be filled in by interpolation.

Also the data rates can be computed at various interfaces, and may refer to the net data rate available for the final user, or to the aggregate data rate including the overhead data (e.g., control traffic), or to the total data rate including the error control overhead (e.g., RS overhead), or to the ultimate line rate achievable over the transmission medium.

The vectored SNR in a system is normally estimated by the receiver of each line, and these values can be reported via a management or diagnosis interface. Alternatively, it may be convenient for the network characterization unit 140 to form its own estimate using the error feedback samples **E** described above. In particular, the current noise plus interference level on line $L_n$, normalized to a reference constellation point $\pm(1+j)$, is given by:

$$\hat{\phi}_n^2 = \frac{1}{T} \sum_{t=1}^{T} |E_{nt}|^2 \quad (6).$$

Similar to above, the vectored SNR level on line Ln can be estimated as:

$$\hat{\gamma}_n = 10\log_{10}(2) - 10\log_{10}(\hat{\phi}_n^2) \quad (7).$$

The attainable vectored bit rate can be computed from the estimated vectored SNR level for all tones again using usual methods. The attainable bit rates and SNRs computed by the network characterization unit 140 can be compared with the rates and SNRs reported by the receivers 210 as a diagnostic tool.

The estimation of the non-vectored bit rate can proceed as follows. The network characterization unit 140 knows the current precoding matrix **P**. The network characterization unit 140 can obtain, either from the far-end receivers 210, or from the SNR estimation above, the noise and interference level $\phi_n{}^2$. The ratio for line $L_n$ can be expressed in terms of the channel **A** = **I**+**B** and precoder **P** = **I**+**C** as:

$$\phi_n^2=\sigma_n^2+\sum_m\left|\{\mathbf{AP-I}\}_{nm}\frac{S_m}{S_n}\right|^2=\sigma_n^2+\sum_m\left|\{\mathbf{B+C+BC}\}_{nm}\right|^2\frac{S_m^2}{S_n^2}\quad(8),$$

wherein $S_m{}^2$ denotes the transmit power on line $L_m$.

Taking a first order approximation that the term **BC** is negligible compared to **B** and **C**, we have:

$$\phi_n^2\approx\sigma_n^2+\sum_m\left|B_{nm}+C_{nm}\right|^2\frac{S_m^2}{S_n^2}=\sigma_n^2+\sum_m\left|\widetilde{B}_{nm}+\widetilde{C}_{nm}\right|^2\quad(9),$$

wherein for each pair of lines $L_n$ and $L_m$ we have defined the weighted coefficients $\widetilde{B}_{nm}=B_{nm}\dfrac{S_m}{S_n}$ and $\widetilde{C}_{nm}=C_{nm}\dfrac{S_m}{S_n}$ .

The first order assumption can be avoided at the cost of additional computation if desired.

Note that for two vectors **b** and **c**, the triangle inequality for the Euclidean norm gives $\|\mathbf{b+c}\|\leq\|\mathbf{b}\|+\|\mathbf{c}\|$ and $\|\mathbf{c}\|\leq\|\mathbf{b+c}\|-\|-\mathbf{b}\|$. Rearranging, these show that $\|\|\mathbf{b}\|\|\geq\|\|\mathbf{c}\|-\|\mathbf{b+c}\|\|$.

Considering the $n^{th}$ rows of $\widetilde{\mathbf{B}}$ and $\widetilde{\mathbf{C}}$ matrices, the smallest value that the sum of squares in a row of $\widetilde{\mathbf{B}}$ can take is:

$$\sqrt{\sum_m\left|\widetilde{B}_{nm}\right|^2}\geq\left|\sqrt{\sum_m\left|\widetilde{C}_{nm}\right|^2}-\sqrt{\phi_n^2-\sigma_n^2}\right|\quad,$$

or

$$\sum_m\left|\widetilde{B}_{nm}\right|^2\geq\left(\sqrt{\sum_m\left|\widetilde{C}_{nm}\right|^2}-\sqrt{\phi_n^2-\sigma_n^2}\right)^2\quad(10)$$

Then a lower bound on the non-vectored noise level is thus:

$$v_n^2:=\sigma_n^2+\sum_m\left|\widetilde{B}_{nm}\right|^2\geq\sigma_n^2+\left(\sqrt{\sum_m\left|\widetilde{C}_{nm}\right|^2}-\sqrt{\phi_n^2-\sigma_n^2}\right)^2:=\hat{V}_n^2\quad(11).$$

It is worth pointing out two extreme cases in which these expressions simplify. When the precoder coefficients are zero, the equation simplifies to $\hat{V}_n^2=\hat{\phi}_n^2$ , meaning that the current SNR is the non-vectored SNR. On the other hand, when the precoder has converged to nearly ideal values, such that the vectored noise variance $\phi_n^2$ is much smaller than the corresponding row of the compensation matrix **C**, then the bound on non-vectored noise level is approximately

$$\hat{V}_n^2\approx\sum_m\left|\widetilde{C}_{nm}\right|^2=\sum_m\left|C_{nm}\right|^2\frac{S_m^2}{S_n^2}\quad.$$

To summarize, using the single-user noise level $\sigma_n^2$ , the vectored residual noise level $\phi_n^2$ , the compensation coefficients **C**, and the relative transmit PSD levels between lines, the network characterization unit 140 can compute the lower bound $\overset{\wedge 2}{\overset{}{v}}_n$ on the non-vectored noise level. Then the non-vectored SNR is then upper-bounded by:

$$\hat{\gamma}_n = 10\log_{10}(2) - 10\log_{10}(\hat{v}_n^2) \quad (12).$$

Likewise, using similar arguments, the non-vectored noise level is upper bounded by:

$$v_n^2 := \sigma_n^2 + \sum_m \left|\tilde{B}_{nm}\right|^2 \leq \sigma_n^2 + \left(\sqrt{\overline{\sum_m \left|\tilde{C}_{nm}\right|^2}} + \sqrt{\phi_n^2 - \sigma_n^2}\right)^2 := \bar{v}_n^2 \quad (13),$$

such that non-vectored SNR is lower-bounded by:

$$\hat{\gamma}_n = 10\log_{10}(2) - 10\log_{10}(\bar{v}_n^2) \quad (14).$$

Similarly, one can estimate vectoring performance upstream although operations are somewhat complicated by the fact that the postcoder amplifies the received noise to some extent.

In the upstream direction, the error feedback samples received on a particular tone over a pilot cycle of length T can be represented as:

$$\mathbf{E} = (\mathbf{LQGDS} - \mathbf{I})\mathbf{V} + \mathbf{LQZ} \quad (15),$$

wherein **E** is an NxT matrix of error feedback samples, **L** is diagonal per-line FEQ, **Q** is the NxN postcoder matrix, **G** is the normalized NxN channel matrix, **D** is the NxN diagonal direct gain matrix with **H** = **GD** being the upstream channel, **S** is the diagonal transmit gain matrix, **I** is the identity matrix, **V** is the NxT pilot matrix with each row representing an assigned pilot sequence, and **Z** is an NxT matrix of receiver background noise samples.
We assume that the vectoring system has knowledge of **Q**, **S**, and **V**, as well as knowledge of the magnitude of the elements of the direct gains **D**. In general, we expect **L**, **G**, the phase of **D**, and of course the noise **Z** to be unknown.

We can assume, in addition that the FEQ matrix **L** is trained in the receiver to achieve unit gain overall, that is:

$$\mathbf{L}d\{\mathbf{QG}\}\mathbf{DS} = \mathbf{I},$$

wherein the notation d{**A**} represents a diagonal matrix with main diagonal taken from the matrix **A**.

Hence:

$$\mathbf{L} = \mathbf{S}^{-1}\mathbf{D}^{-1}d\{\mathbf{QG}\}^{-1} \quad (16).$$

In non-vectored operation, we have **Q** = **I**, which yields d{**QG**} = d{**G**} = **I** and the simplified equation:

$$\mathbf{E} = (\mathbf{D}^{-1}\mathbf{S}^{-1}\mathbf{GDS} - \mathbf{I})\mathbf{V} + \mathbf{D}^{-1}\mathbf{S}^{-1}\mathbf{Z} \quad (17).$$

In single user operation (with **Q** = **I** and with only one non-zero value of **S** at a time), the noise variance at the FEQ output is $|\mathbf{D}|^{-2}\mathbf{S}^{-2}\Sigma$, where $\Sigma$ is a diagonal matrix specifying the variance of the noise vector **Z**. In order to estimate the single-user rate, we need to estimate the variance of **Z** (since **D** and **S** are known).

Similarly to the downstream case, we can estimate the random noise component of the error feedback by correlating the error feedback **E** with the rows of a (T-N)xT matrix **W** such that the rows of **W** (the "unused pilots") are orthonormal (i.e., **WW**[H] = I) and are orthogonal to all of the rows of **V** (i.e., **VW**[H] = 0). Correlating each row of the error feedback matrix **E** with each of the rows of **W** yields the Nx(T-N) matrix:

$$\mathbf{F} = \mathbf{EW}^H = \mathbf{LQZW}^H \quad (18).$$

Assuming independence of the elements of $\mathbf{Z}$, and using the orthonormality of $\mathbf{W}$, it follows that the columns of $\mathbf{ZW}^H$ are independent of one another, and that each column is a random variable $\mathbf{z}$ with variance $\Sigma$. Then the columns of $\mathbf{F}$ are independent of each other, and each is a random variable of the form $\mathbf{f} = \mathbf{LQz}$.

The variance of each element of the random variable $\mathbf{F}$ can be estimated as:

$$\theta_n = \frac{1}{T-N} \sum_{m=1}^{T-N} |F_{nm}|^2 \quad (19).$$

Let us denote a vector $\eta$ with elements $\eta_n = \sigma_n^2$ representing the variances of elements of $\mathbf{Z}$.

The relationship between the vector $\theta$ of variances of $\mathbf{f}$ and the vector $\eta$ of variances of $\mathbf{z}$ is:

$$\theta = \mathbf{B}\eta \quad (20),$$

wherein $\mathbf{B}$ is a non-negative matrix with entries $B_{mn} = |L_{mm}|^2 |Q_{mn}|^2$. The matrix $\mathbf{B}$ captures the extent to which the postcoder and FEQ amplify the background noise.

We have estimated the amplified noise $\theta$ and want to estimate the original noise level $\eta$. There could be various ways to do this; we illustrate a version that should have good robustness to estimation error and reasonably low complexity.

First, note in the expression $\mathbf{L} = \mathbf{D}^{-1}\mathbf{S}^{-1}d\{\mathbf{QG}\}^{-1}$, the network characterization unit 140 does not have direct knowledge of the term $d\{\mathbf{QG}\}$.

As an exception, it is worth noting that if the system is operating without upstream vectoring ($Q = I$), then we have $d\{\mathbf{QG}\} = \mathbf{I}$, $\mathbf{B} = |\mathbf{D}|^{-2}\mathbf{S}^{-1}$, and we immediately have $\eta = |\mathbf{D}|^2\mathbf{S}^2\theta$.

In cases when upstream vectoring is active, the noise level $\eta$ can be bounded as follows.

For VDSL upstream frequencies, we can assume that the direct channel $H_{nn}$ from transceiver $210_n$ to transceiver $110_n$ is stronger than the crosstalk channel $H_{mn}$ from transceiver $210_n$ to another transceiver $110_m$. under this assumption,

$$|G_{mn}| = \frac{|H_{mn}|}{|H_{nn}|} \leq 1 \quad \text{for any } \{m,n\} \text{ pair, in which case} \quad (\mathbf{QG})_{nn} = Q_{nn} + \sum_{m \neq n} Q_{nm} G_{mn} \quad \text{satisfies the bounds:}$$

$$|Q_{nn}| - \sum_{m \neq n} |Q_{nm}| \leq |(\mathbf{QG})_{nn}| \leq |Q_{nn}| + \sum_{m \neq n} |Q_{nm}| \quad (21).$$

Using these bounds on $d\{\mathbf{QG}\}$, and using knowledge of the direct gain magnitudes $|\mathbf{D}|$ and of the power scaling $\mathbf{S}$, one can immediately obtain bounds on $|\mathbf{L}|$, whence upper and lower bounds on $\mathbf{B}$, which we denote $\mathbf{B}^{lb} \leq \mathbf{B} \leq \mathbf{B}^{ub}$.

Next, the matrix $\mathbf{B}$ is decomposed as $\mathbf{B} = d\{\mathbf{B}\} + \mathbf{M}$, and note that $\eta$ satisfies the fixed point equation $\eta = d\{\mathbf{B}\}^{-1}(\theta - \mathbf{M}\eta)$. Given upper and lower bounds on $\eta$, and given the upper and lower bounds on $\mathbf{B}$, we can then use this fixed point equation to develop new bounds for $\eta$ of the form:

$$d\{\mathbf{B}^{ub}\}^{-1}\theta - d\{\mathbf{B}^{lb}\}^{-1}\mathbf{M}^{ub}\eta^{ub} \leq \eta \leq d\{\mathbf{B}^{lb}\}^{-1}\theta - d\{\mathbf{B}^{ub}\}^{-1}\mathbf{M}^{lb}\eta^{lb} \quad (22).$$

Such bounds can be refined by initializing with $\eta^{lb}[0] = 0$, $\eta^{ub}[0] = d\{\mathbf{B}^{lb}\}^{-1}\theta$, and then iteratively computing:

$$\eta^{lb}[n+1] = \max\left\{\eta^{lb}[n], d\{B^{ub}\}^{-1}\theta - d\{B^{lb}\}^{-1}M^{ub}\eta^{ub}[n]\right\}$$

$$\eta^{ub}[n+1] = \min\left\{\eta^{ub}[n], d\{B^{lb}\}^{-1}\theta - d\{B^{ub}\}^{-1}M^{lb}\eta^{lb}[n]\right\} \quad (23).$$

The sequence of lower bounds will be non-decreasing and the upper bounds non-increasing. On tones where the postcoder $\mathbf{Q}$ is diagonally dominant, the bounds will converge to be close to each other, showing that the noise variance is estimated accurately. On tones where $\mathbf{Q}$ is not diagonally dominant, the bounds will indicate the uncertainty in the estimate of the noise variance.

In the single user case, the post-FEQ received signal when symbol $u_n$ is sent on line $L_n$ is:

$$y_n = u_n + D_n^{-1}S_n^{-1}z_n \quad (24).$$

Since $u_n$ has power 2, an upper bound on the SNR on line n can be expressed as:

$$\hat{\gamma}_n = 10\log_{10}(2) + 20\log_{10}(|D_n|) + 20\log_{10}(S_n) - 10\log_{10}(\eta_n^{1b}) \quad (25).$$

The vectored SNR in a system is normally estimated by the receiver of each line, and these values can be reported via a management or diagnosis interface. Alternatively, it may be convenient for the network characterization unit 140 to form its own estimate using the error feedback samples **E** described above. In particular, the current noise plus interference level on line $L_n$, normalized to a reference constellation point $\pm(1+j)$, is:

$$\hat{\phi}_n^2 = \frac{1}{T}\sum_{t=1}^{T}|E_{nt}|^2 \quad (26).$$

Similar to above, the vectored SNR level can be estimated as:

$$\hat{\gamma}_n = 10\log_{10}(2) - 10\log_{10}(\hat{\phi}_n^2) \quad (27).$$

The attainable vectored rate can be computed from the estimated vectored SNR level for all tones using usual methods. The attainable rates and SNRs computed by the network characterization unit 140 can be compared with the rates and SNRs reported by the receivers 110 as a diagnostic tool.

Estimation of the non-vectored bitrate can proceed as follows.

The network characterization unit 140 knows the current postcoder $\mathbf{Q} = d\{\mathbf{Q}\}(\mathbf{I} + \mathbf{Q}°)$. The network characterization unit 140 can obtain, either from the receivers 110 or from the SNR estimation above, the current noise-to-signal ratios $\phi_n^2$.

From this information the network characterization unit 140 can bound the coefficients of the normalized upstream channel $\mathbf{G} = \mathbf{I} + \mathbf{G}°$. The bounds can then be used to bound the non-vectored SNR and bitrate.

The current FEQ output on line Ln can be expressed as:

$$y_n = u_n + (\mathbf{LQGDS} - \mathbf{I})u_n + \mathbf{LQ}z_n \quad (28),$$

wherein the three terms on the right side represent signal, interference and noise respectively.

The product of postcoder and channel is:

$$\mathbf{QG} = d\{\mathbf{Q}\}(\mathbf{I} + \mathbf{Q}°)(\mathbf{I} + \mathbf{G}°) = d\{\mathbf{Q}\}(\mathbf{I} + \mathbf{Q}° + \mathbf{G}° + \mathbf{Q}°\mathbf{G}°) \quad (29).$$

Taking a first order approximation that $\mathbf{Q}°\mathbf{G}°$ is negligible compared with other terms, we have $\mathbf{QG}$ approximate equal to $d\{\mathbf{Q}\}(\mathbf{I} + \mathbf{Q}° + \mathbf{G}°)$ and $d\{QG\}$ approximately equal to $d\{\mathbf{Q}\}$.

Substituting these expressions and using $\mathbf{L}^{-1} = \mathbf{DS}d\{\mathbf{QG}\}$, we obtain:

$$y_n = u_n + (\mathbf{D}^{-1}\mathbf{S}^{-1}(\mathbf{I}+\mathbf{Q}°+\mathbf{G}°)\mathbf{DS}-\mathbf{I})u_n + \mathbf{LQ}z = u_n + \mathbf{D}^{-1}\mathbf{S}^{-1}(\mathbf{Q}°+\mathbf{G}°)\mathbf{DS}u_n + \mathbf{LQ}z \quad (30).$$

In these terms, the current noise-to-signal ratio on line $L_n$ can be expressed as:

$$\phi_n^2 \approx \hat{\theta}_n + \sum_m |Q_{nm}^0 + G_{nm}^0|^2 \frac{|D_m|^2 S_m^2}{|D_n|^2 S_n^2} = \hat{\theta}_n + \sum_m |\tilde{Q}_{nm}^0 + \tilde{G}_{nm}^0|^2 \quad (31),$$

wherein $\hat{\theta}$ is the estimate of the variance of the noise term $\mathbf{LQ}z$ as calculated using correlation with unused pilots **W**,

$$\widetilde{Q}_{nm}^0=Q_{nm}^0\frac{|D_m|S_m}{|D_n|S_n} \quad \widetilde{G}_{nm}^0=G_{nm}^0\frac{|D_m|S_m}{|D_n|S_n}$$

and wherein we have defined weighted coefficients and .

Using the expression $\|\mathbf{g}\|\geq\|\|\mathbf{q}\|-\|\mathbf{g}+\mathbf{q}\|\|$ derived in the downstream case, and considering the $n^{th}$ rows of $\bar{\mathbf{G}}^0$ and $\tilde{\mathbf{Q}}^0$ as vectors, the smallest value that the sum of squares in a row of $\bar{\mathbf{G}}^0$ can take is:

$$\sqrt{\sum_m|\widetilde{G}_{nm}^0|^2}=\left|\sqrt{\sum_m|\widetilde{Q}_{nm}^0|^2}-\sqrt{\phi_n^2-\hat{\theta}_n}\right| ,$$

or

$$\sum_m|\widetilde{G}_{nm}^0|^2=\left(\sqrt{\sum_m|\widetilde{Q}_{nm}^0|^2}-\sqrt{\phi_n^2-\hat{\theta}_n}\right)^2 \quad (32).$$

Now, in a non-vectored scenario, we would have $y_n = u_n + \mathbf{D^{-1}S^{-1}G^oDS}u_n + \mathbf{D^{-1}S^{-1}}Z_n$ so that the non-vectored SNR can be lower-bounded as:

$$v_n^2:=|D_n|^{-2}S_n^{-2}\eta_n+\sum_m|\widetilde{G}_{nm}^0|^2\geq|D_n|^{-2}S_n^{-2}\eta_n^{1b}+\left(\sqrt{\sum_m|\widetilde{Q}_{nm}^0|^2}-\sqrt{\phi_n^2-\hat{\theta}_n}\right)^2:=\hat{v}_n^2$$

(33).

It is worth pointing out two extreme cases in which these expressions simplify. When the postcoder coefficients are zero, we previously showed that $\eta_n^{ub}=\eta_n^{1b}=|D_n|^2S_n^2\hat{\theta}_n$ . In this case the equation simplifies to $\hat{v}_n^2=\phi_n^2$ , meaning that the current "vectored" SNR is same as the non-vectored SNR. On the other hand, when the precoder has converged to nearly ideal values, such that the vectored noise variance $\phi_n^2$ is much smaller than the corresponding row of the postcoder matrix $\mathbf{Q}$, then the bound on non-vectored noise level is approximately

$$\hat{v}_n^2\approx\sum_m|\widetilde{Q}_{nm}^0|^2=\sum_m|Q_{nm}^0|^2\frac{|D_m|^2S_m^2}{|D_n|^2S_n^2} .$$

To summarize, using the lower bound on the single-user noise level $\eta_n^{1b}$ , the vectored noise plus interference level $\phi_n^2$ , the vectored noise level $\theta_n$, the normalized postcoder coefficients $\mathbf{Q}°$, the relative transmit PSD levels between lines, and the direct gain magnitudes $|\mathbf{D}|$, one can compute the lower bound $\hat{v}_n^2$ on the non-vectored noise level. The non-vectored SNR is then upper-bounded by:

$$\hat{\gamma}_n=10\log_{10}(2)-10\log_{10}(\hat{v}_n^2) \quad (34).$$

For a vectored system in operation, the above techniques can be used to estimate, for each line and without any service interruption, the downstream and upstream single-user bit rates, the downstream and upstream vectored bit rates, and the downstream and upstream non-vectored bit rates. From these, additional performance metrics such as the vectoring gap to the single-user bit rate, and the vectoring gain over the non-vectored bit rate can be computed too.

The so-computed vectoring gaps and vectoring gains can also be used together with actual vectored bit rates as reported by the receivers 110 and 210 so as to refine the estimates of the single-user bit rates and of the non-vectored bit rates.

In an alternative embodiment (not shown), the vectoring performance metrics are assessed by a network management system communicatively coupled to DPUs through a data communication network, such as the Internet, and including a network characterization unit as per the network characterizing unit 140.

The DPUs forward the necessary pieces of information to the network management system for remote computation of the vectoring performance metrics, including the sequences of error samples **E** as measured by the receivers during one crosstalk acquisition cycle and the unused pilots **W**.

For downstream metrics, the current coefficient values of the precoding matrix **P** and of the transmit PSD vector **S** are also sent to the network management system. Alternatively, one could only send the weighted row sums

$$\sum_m \left| P_{nml} \right|^2 \frac{S_m^2}{S_n^2}$$

for each subscriber line $L_n$, thereby saving some communication bandwidth between the DPUs and the network management system.

For upstream metrics, further information are needed, such as the magnitudes of the direct channel gains **D**, and the upper and lower bounds on the **B** matrix. One may also introduce tradeoffs by using looser bounds that require less communication bandwidth.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

## Claims

1. A **network characterizing unit** (140) for in-service characterization of **a single-user data rate** achievable over **a particular subscriber line** ($L_n$) of **a vectoring group**, and configured to receive **error samples** ($E_{nt}$) as successively measured by **a receiver** (110; 210) coupled to the particular subscriber line while **sequences of pilot symbols** are being transmitted over the respective subscriber lines of the vectoring group, the sequences of pilot symbols being modulated with **respective pilot sequences** ($V_{nt}$) selected from **a set of mutually orthogonal pilot sequences** (150),
   wherein the network characterizing unit is further configured to characterize the single-user data rate by correlation of the received error samples with **at least one unassigned pilot sequence** ($W_{mt}$) from the set of mutually orthogonal pilot sequences, the at least one unassigned pilot sequence being not used for modulation of the transmitted sequences of pilot symbols,
   and wherein characterizing the single-user data rate comprises estimating a value of the single-user data rate and/or determining a bound for a value of the single-user data rate.

2. **A network characterizing unit** (140) according to claim 1, wherein the characterization of the single-user data rate comprises characterizing **a crosstalk-free noise level** at the receiver by correlation of the received error samples with the least one unassigned pilot sequence, and characterizing the single-user data rate from the so-characterized crosstalk-free noise level.

**3.** **A network characterizing unit** (140) according to claim 1 or 2, *wherein* the network characterizing unit is further configured to characterize **a vectored data rate** achievable over the particular subscriber line from the received error samples, and to derive **a vectoring gap** from the so-characterized single-user and vectored data rates.

**4.** **A network characterizing unit** (140) according to claim 3, *wherein* the network characterizing unit is further configured to refine the characterization of the single-user data rate from the vectoring gap and **an actual vectored data rate** reported by the receiver.

**5.** **A network characterizing unit** (140) according to claim 2, *wherein* the network characterizing unit is further configured to receive **vectoring information** indicative of current vectoring operation for the vectoring group, to characterize **a crosstalk level** at the receiver from the vectoring information, and to characterize **a non-vectored data rate** achievable over the particular subscriber line from the so-characterized crosstalk-free noise level and crosstalk level.

**6.** **A network characterizing unit** (140) according to claim 5, *wherein* the vectoring information comprises **individual vectoring coefficient values** that are used for jointly processing the signals to be transmitted to, or received from, the subscriber lines of the vectoring group.

**7.** **A network characterizing unit** (140) according to claim 5, *wherein* the vectoring information comprises weighted row sums of the squared magnitudes of vectoring coefficient values that are used for jointly processing the signals to be transmitted to, or received from, the subscriber lines of the vectoring group.

**8.** **A network characterizing unit** (140) according to any of claims 1 to 7, *wherein* a desired number M of pilot sequences from the set of mutually orthogonal pilot sequences are kept unassigned and available for characterization of the single-user data rate.

**9.** **A network characterizing unit** (140) according to claim 8, *wherein* the set of mutually orthogonal pilot sequences comprises pilot sequences of length T greater than or equal to N + M, N denoting the size of the vectoring group.

**10.** **An access node** (100) operable to provide communication services to subscribers over **a loop plant**, and comprising a **network characterizing unit** (140) according to any of claims 1 to 9.

**11.** **An access node** (100) according to claim 10, wherein the access node is a **Digital Subscriber Line Access Multiplexer DSLAM.**

**12.** **A computing platform** communicatively coupled to **an access node** operable to provide communication services to subscribers over **a loop plant**, and comprising **a network characterizing unit** according to any of claims 1 to 9.

**13.** **A method** for in-service characterization of **a single-user data rate** achievable over **a particular subscriber line** ($L_n$) of **a vectoring group**, and comprising receiving **error samples** ($E_{nt}$) as successively measured by **a receiver** (110; 210) coupled to the particular subscriber line while **sequences of pilot symbols** are being transmitted over the respective subscriber lines of the vectoring group, the sequences of pilot symbols being modulated with **respective pilot sequences** ($V_{nt}$) selected from **a set of mutually orthogonal pilot sequences** (150),
*wherein* the method further comprises characterizing the single-user data rate by correlation of the received error samples with **at least one unassigned pilot sequence** ($W_{mt}$) from the set of mutually orthogonal pilot sequences, the at least one unassigned pilot sequence being not used for modulation of the transmitted sequences of pilot symbols,
*and wherein* characterizing the single-user data rate comprises estimating a value of the single-user data rate and/or determining a bound for a value of the single-user data rate.

**Patentansprüche**

**1.** **Netzwerkcharakterisierende Einheit** (140) zur Charakterisierung **einer Einzelbenutzer-Datenrate** während des Betriebs, die über **einen bestimmten Teilnehmeranschluss** ($L_n$) **einer Vectoring-Gruppe** erreichbar ist, und die ausgelegt ist zum Empfangen von **Fehlerabtastwerten** ($E_{nt}$), wie sie nacheinander von **einem Empfänger** (110; 210) gemessen werden, der an den bestimmten Teilnehmeranschluss gekoppelt ist, während **Pilotsymbolsequenzen** über die jeweiligen Teilnehmeranschlüsse der Vectoring-Gruppe übertragen werden, wobei die Pilotsymbolse-

quenzen mit **jeweiligen Pilotsequenzen** ($V_{nt}$) moduliert werden, die aus **einer Reihe von zueinander orthogonalen Pilotsequenzen** (150) ausgewählt werden, *wobei* die netzwerkcharakterisierende Einheit weiterhin ausgelegt ist zum Charakterisieren der Einzelbenutzer-Datenrate durch Korrelation der empfangenen Fehlerabtastwerte mit **mindestens einer nichtzugewiesenen Pilotsequenz** ($W_{mt}$) aus der Reihe von zueinander orthogonalen Pilotsequenzen, wobei die mindestens eine nichtzugewiesene Pilotsequenz nicht zur Modulation der übertragenen Pilotsymbolsequenzen verwendet wird,

*und wobei*

das Charakterisieren der Einzelbenutzer-Datenrate das Schätzen eines Wertes der Einzelbenutzer-Datenrate und/oder

das Bestimmen einer Grenze für einen Wert der Einzelbenutzer-Datenrate umfasst.

2. **Netzwerkcharakterisierende Einheit** (140) nach Anspruch 1, *wobei* die Charakterisierung der Einzelbenutzer-Datenrate das Charakterisieren **eines nebensprechfreien Rauschpegels** am Empfänger durch Korrelation der empfangenen Fehlerabtastwerte mit der mindestens einen nichtzugewiesenen Pilotsequenz und das Charakterisieren der Einzelbenutzer-Datenrate aus dem so charakterisierten nebensprechfreien Rauschpegel umfasst.

3. **Netzwerkcharakterisierende Einheit** (140) nach Anspruch 1 oder 2, *wobei* die netzwerkcharakterisierende Einheit weiterhin ausgelegt ist zum Charakterisieren **einer vektorisierten Datenrate**, die über den bestimmten Teilnehmeranschluss aus den empfangenen Fehlerabtastwerten erreichbar ist, und zum Ableiten **eines Vectoring-Abstands** aus den so charakterisierten Einzelbenutzer- und vektorisierten Datenraten.

4. **Netzwerkcharakterisierende Einheit** (140) nach Anspruch 3, *wobei* die netzwerkcharakterisierende Einheit weiterhin ausgelegt ist zum Verfeinern der Charakterisierung der Einzelbenutzer-Datenrate aus dem Vectoring-Abstand und einer von dem Empfänger gemeldeten **tatsächlichen vektorisierten Datenrate**.

5. **Netzwerkcharakterisierende Einheit** (140) nach Anspruch 2, *wobei* die netzwerkcharakterisierende Einheit weiterhin ausgelegt ist zum Empfangen von **Vectoring-Informationen**, die bezeichnend sind für eine aktuelle Vectoring-Operation für die Vectoring-Gruppe, zum Charakterisieren **eines Nebensprechpegels** am Empfänger der Vectoring-Informationen, und zum Charakterisieren **einer nichtvektorisierten Datenrate**, die über den bestimmten Teilnehmeranschluss vom so charakterisierten nebensprechfreien Rauschpegel und Nebensprechpegel erreichbar ist.

6. **Netzwerkcharakterisierende Einheit** (140) nach Anspruch 5, *wobei* die Vectoring-Informationen **individuelle Vectoring-Koeffizientwerte** umfassen, die zum gemeinsamen Verarbeiten der Signale verwendet werden, die an die Teilnehmeranschlüsse der Vectoring-Gruppe zu übertragen sind oder von diesen empfangen werden.

7. **Netzwerkcharakterisierende Einheit** (140) nach Anspruch 5, *wobei* die Vectoring-Informationen gewichtete Zeilensummen der quadrierten Größen von Vectoring-Koeffizientwerten umfassen, die zum gemeinsamen Verarbeiten der Signale verwendet werden, die an die Teilnehmeranschlüsse der Vectoring-Gruppe zu übertragen sind oder von diesen empfangen werden.

8. **Netzwerkcharakterisierende Einheit** (140) nach einem beliebigen der Ansprüche 1 bis 7, *wobei* eine gewünschte Anzahl M von Pilotsequenzen aus der Reihe von zueinander orthogonalen Pilotsequenzen nichtzugewiesen und zur Charakterisierung der Einzelbenutzer-Datenrate verfügbar bleibt.

9. **Netzwerkcharakterisierende Einheit** (140) nach Anspruch 8, *wobei* die Reihe von zueinander orthogonalen Pilotsequenzen Pilotsequenzen einer Länge T größer oder gleich N + M umfasst, wobei N die Größe der Vectoring-Gruppe bezeichnet.

10. **Zugangsknoten** (100), der betriebsfähig ist zum Bereitstellen von Kommunikationsdiensten für Teilnehmer über **eine Schleifenanlage**, und der **eine netzwerkcharakterisierende Einheit** (140) nach einem beliebigen der Ansprüche 1 bis 9 umfasst.

11. **Zugangsknoten** (100) nach Anspruch 10, wobei der Zugangsknoten **ein digitaler Teilnehmeranschlusszugangsmultiplexer DSLAM** ist.

12. **Rechenplattform**, die kommunikativ an **einen Zugangsknoten** gekoppelt ist, der betriebsfähig ist zum Bereitstellen von Kommunikationsdiensten für Teilnehmer über **eine Schleifenanlage**, und der **eine netzwerkcharakterisierende Einheit** nach einem beliebigen der Ansprüche 1 bis 9 umfasst.

**13.** **Verfahren** zur Charakterisierung **einer Einzelbenutzer-Datenrate** während des Betriebs, die über **einen bestimmten Teilnehmeranschluss** ($L_n$) **einer Vectoring-Gruppe** erreichbar ist, und umfassend das Empfangen von **Fehlerabtastwerten** ($E_{nt}$), wie sie nacheinander von **einem Empfänger** (110; 210) gemessen werden, der an den bestimmten Teilnehmeranschluss gekoppelt ist, während **Pilotsymbolsequenzen** über die jeweiligen Teilnehmeranschlüsse der Vectoring-Gruppe übertragen werden, wobei die Pilotsymbolsequenzen mit **jeweiligen Pilotsequenzen** ($V_{nt}$) moduliert werden, die aus **einer Reihe von zueinander orthogonalen Pilotsequenzen** (150) ausgewählt werden, *wobei* das Verfahren weiterhin das Charakterisieren der Einzelbenutzer-Datenrate durch Korrelation der empfangenen Fehlerabtastwerte mit **mindestens einer nichtzugewiesenen Pilotsequenz** ($W_{mt}$) aus der Reihe von zueinander orthogonalen Pilotsequenzen umfasst, wobei die mindestens eine nichtzugewiesene Pilotsequenz nicht zur Modulation der übertragenen Pilotsymbolsequenzen verwendet wird,
*und wobei*
das Charakterisieren der Einzelbenutzer-Datenrate das Schätzen eines Wertes der Einzelbenutzer-Datenrate und/oder
das Bestimmen einer Grenze für einen Wert der Einzelbenutzer-Datenrate umfasst.

## Revendications

**1.** **Unité de caractérisation de réseau** (140) pour une caractérisation en service d'un **débit de données d'utilisateur unique** pouvant être atteint sur **une ligne d'abonné particulière** ($L_n$) d'un **groupe de vectorisation**, et configurée pour recevoir des **échantillons d'erreur** ($E_{nt}$) tels que mesurés successivement par **un récepteur** (110 ; 210) couplé à la ligne d'abonné particulière alors que des **séquences de symboles pilotes** sont transmises sur les lignes d'abonné respectives du groupe de vectorisation, les séquences de symboles pilotes étant modulées avec des **séquences pilotes respectives** ($V_{nt}$) sélectionnées parmi **un ensemble de séquences pilotes mutuellement orthogonales** (150),
*dans laquelle* l'unité de caractérisation de réseau est en outre configurée pour caractériser le débit de données d'utilisateur unique par corrélation des échantillons d'erreur reçus avec **au moins une séquence pilote non attribuée** ($W_{mt}$) parmi l'ensemble de séquences pilotes mutuellement orthogonales, l'au moins une séquence pilote non attribuée n'étant pas utilisée pour la modulation des séquences transmises de symboles pilotes,
*et dans laquelle* la caractérisation du débit de données d'utilisateur unique comprend les étapes suivantes :

estimer une valeur du débit de données d'utilisateur unique et/ou déterminer une limite pour une valeur du débit de données d'utilisateur unique.

**2.** **Unité de caractérisation de réseau** (140) selon la revendication 1, *dans laquelle* la caractérisation du débit de données d'utilisateur unique comprend la caractérisation d'un **niveau de bruit sans diaphonie** au niveau du récepteur par corrélation des échantillons d'erreur reçus avec l'au moins une séquence pilote non attribuée, et la caractérisation du débit de données d'utilisateur unique à partir du niveau de bruit sans diaphonie ainsi caractérisé.

**3.** **Unité de caractérisation de réseau** (140) selon la revendication 1 ou 2, *dans laquelle* l'unité de caractérisation de réseau est en outre configurée pour caractériser **un débit de données vectorisé** pouvant être obtenu sur la ligne d'abonné particulière à partir des échantillons d'erreur reçus, et pour dériver **un intervalle de vectorisation** à partir des débits de données d'utilisateur unique et vectorisé ainsi caractérisés.

**4.** **Unité de caractérisation de réseau** (140) selon la revendication 3, *dans laquelle* l'unité de caractérisation de réseau est en outre configurée pour affiner la caractérisation du débit de données d'utilisateur unique à partir de l'intervalle de vectorisation et d'un **débit de données vectorisé réel** signalé par le récepteur.

**5.** **Unité de caractérisation de réseau** (140) selon la revendication 2, *dans laquelle* l'unité de caractérisation de réseau est en outre configurée pour recevoir des **informations de vectorisation** indiquant une opération de vectorisation en cours pour le groupe de vectorisation, pour caractériser **un niveau de diaphonie** au niveau du récepteur à partir des informations de vectorisation, et pour caractériser **un débit de données non vectorisé** pouvant être obtenu sur la ligne d'abonné particulière à partir du niveau de bruit sans diaphonie et du niveau de diaphonie ainsi caractérisés.

**6.** **Unité de caractérisation de réseau** (140) selon la revendication 5, *dans laquelle* les informations de vectorisation comprennent des **valeurs de coefficients de vectorisation individuelles** qui sont utilisées pour traiter conjointement les signaux devant être transmis aux lignes d'abonné ou reçus à partir des lignes d'abonné du groupe de vectorisation.

7. **Unité de caractérisation de réseau** (140) selon la revendication 5, *dans laquelle* les informations de vectorisation comprennent des **sommes de rangées pondérées** des amplitudes élevées au carré de valeurs de coefficients de vectorisation qui sont utilisées pour traiter conjointement les signaux devant être transmis aux lignes d'abonné ou reçus à partir des lignes d'abonné du groupe de vectorisation.

8. **Unité de caractérisation de réseau** (140) selon l'une quelconque des revendications 1 à 7, *dans laquelle* un nombre M souhaité de séquences pilotes parmi l'ensemble de séquences pilotes mutuellement orthogonales sont laissées non attribuées et disponibles pour une caractérisation du débit de données d'utilisateur unique.

9. **Unité de caractérisation de réseau** (140) selon la revendication 8, *dans laquelle* l'ensemble de séquences pilotes mutuellement orthogonales comprend des séquences pilotes d'une longueur T supérieure ou égale à N + M, N indiquant la taille du groupe de vectorisation.

10. **Noeud d'accès** (100) permettant de fournir des services de communication aux abonnés sur **une installation en boucle**, et comprenant **une unité de caractérisation de réseau** (140) selon l'une quelconque des revendications 1 à 9.

11. **Noeud d'accès** (100) selon la revendication 10, dans lequel le noeud d'accès est un **multiplexeur d'accès de ligne d'abonné numérique DSLAM**.

12. **Plate-forme informatique** couplée en communication à **un noeud d'accès** permettant de fournir des services de communication aux abonnés sur **une installation en boucle**, et comprenant **une unité de caractérisation de réseau** selon l'une quelconque des revendications 1 à 9.

13. **Procédé** pour une caractérisation en service d'un **débit de données d'utilisateur unique** pouvant être atteint sur **une ligne d'abonné particulière** ($L_n$) d'un **groupe de vectorisation**, et comprenant la réception **d'échantillons d'erreur** ($E_{nt}$) tels que mesurés successivement par **un récepteur** (110 ; 210) couplé à la ligne d'abonné particulière alors que des **séquences de symboles pilotes** sont transmises sur les lignes d'abonné respectives du groupe de vectorisation, les séquences de symboles pilotes étant modulées avec des **séquences pilotes respectives** ($V_{nt}$) sélectionnées parmi **un ensemble de séquences pilotes mutuellement orthogonales** (150),
*dans lequel* le procédé comprend en outre la caractérisation du débit de données d'utilisateur unique par corrélation des échantillons d'erreur reçus avec **au moins une séquence pilote non attribuée** ($W_{mt}$) parmi l'ensemble de séquences pilotes mutuellement orthogonales, l'au moins une séquence pilote non attribuée n'étant pas utilisée pour la modulation des séquences transmises de symboles pilotes,
*et dans lequel* la caractérisation du débit de données d'utilisateur unique comprend les étapes suivantes :

estimer une valeur du débit de données d'utilisateur unique et/ou déterminer une limite pour une valeur du débit de données d'utilisateur unique.

Fig. 1

Fig. 2

**EP 2 955 857 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2835911 A